**Europäisches Patentamt**

**European Patent Office**

**Office européen des brevets**

(11) Numéro de publication: **0 030 187**
**B1**

## (12) FASCICULE DE BREVET EUROPEEN

(45) Date de publication du fascicule du brevet: **31.07.85**

(21) Numéro de dépôt: **80401685.5**

(22) Date de dépôt: **26.11.80**

(51) Int. Cl.⁴: **A 47 J 43/27, G 01 F 19/00**

**Jointe à la demande no. 80902235.3 (numéro de dépôt de la demande européenne) par décision du 10.11.82.**

(54) Récipient transparent.

(30) Priorité: **28.11.79 FR 7929281**

(43) Date de publication de la demande:
**10.06.81 Bulletin 81/23**

(45) Mention de la délivrance du brevet:
**31.07.85 Bulletin 85/31**

(84) Etats contractants désignés:
**AT BE CH DE GB IT LI NL**

(56) Documents cités:
**CH-A- 236 730**
**DE-U-7 127 473**
**GB-A- 441 515**
**US-A-1 744 328**
**US-A-1 748 483**
**US-A-2 585 255**
**US-A-4 085 866**

(73) Titulaire: **Benisti, Julien**
**49 Rue Youri-Gagarine Escalier G2**
**F-92700 Colombes (FR)**

(72) Inventeur: **Benisti, Julien**
**49 Rue Youri-Gagarine Escalier G2**
**F-92700 Colombes (FR)**

EP 0 030 187 B1

Courier Press, Leamington Spa, England.

## Description

La présente invention concerne un récipient transparent destiné notamment à contenir des liquides, des produits d'alimentation ou des médicaments, ledit récipient étant muni de moyens destinés à maintenir le long de sa paroi extérieure une fiche amovible portant des indications de niveaux.

Dans les récipients connus de ce genre (GB—A—441515, US—A—1744328) il n'est pas prévu de moyens d'améliorer la visibilité et la définition des niveaux.

L'objet de l'invention est d'apporter une amélioration de la visibilité des niveaux et de la définition des niveaux tout en favorisant l'homogénéité des produits ou liquides contenus. Ce résultat est atteint selon l'invention en ce que le récipient comporte une paroi intérieure à facettes verticales formant loupes améliorant la visibilité et la définition des niveaux. Le grossissement des lignes des niveaux offre une plus grande précision dans les proportions à respecter lors de la préparation de la recette à l'aide de la fiche qui serait maintenue verticalement en contact avec la paroi extérieure. Selon une autre caractéristique les facettes sont planes.

Le récipient fabriqué en une matière transparente reçoit — par un système de fixation approprié — soit une fiche-recette, soit une fiche-horaire, imprimées sur une ou deux faces. Ceci permit pour une même fiche d'avoir des proportions ou quantités différentes au verso et au recto; ainsi on peut obtenir à l'infini un nombre de fiches qui s'adapteront au récipient sur lequel seront prévus des systèmes qui maintiendront lesdites fiches.

Selon une autre caractéristique de l'invention, les moyens de maintien des fiches sont constitués:

— à la partie supérieure de récipient de deux glissières orientées verticalement avec un écartement correspondant à la largeur de la fiche et

— à la partie inférieure, d'éléments formant butée et munis d'une saignée parallèle à la paroi cylindrique du socle du récipient permettant l'accrochage de la fiche par le bas: ladite fiche étant munie à chacun des angles inférieurs et supérieurs des parties débordantes dont les bords horizontaux inférieurs et supérieurs viennent respectivement en butée sur lesdits moyens de maintien.

Ces moyens de maintien sont conçus de telle manière que les bords verticaux des fiches seront plaqués à l'extérieur, contre la paroi grossissante à cheval sur deux facettes successives.

Les fiches prévues peuvent être réalisées en matériau souple ou rigide, notamment en plastique, carton ou rhodoïd. Selon le cas, elles pourront être opaques, transparentes, translucides ou diaphanes.

Ces fiches peuvent être également imprimées en langues étrangères donc pour la même recette, une fiche pour chaque langue étrangère désirée.

L'introduction d'une fiche sera possible en procédant tout d'abord à l'accrochage du bas dans la saignée, puis l'engagement du haut dans les glissières sera possible par une pression sur les parties débordantes pour ramener les bords verticaux supérieurs de ladite fiche; les parties débordantes supérieures se trouveront donc au-dessus de glissières. Pour retirer la fiche et la remplacer, nous procèderons à l'inverse, c'est-à-dire, par dégager le haut de la fiche en exerçant une pression sur les parties débordantes, et décrocher ensuite le bas.

Le contrôle de l'alimentation du malade sera fait au fur et à mesure puisque le niveau, visible par transparence, du liquide absorbé par la malade doit correspondre à la quantité horaire prescrite par le médecin-traitant. Ce contrôle sera à tout moment possible, aisé et précis par simple lecture du niveau visible en regard de la fiche horaire.

Ce système a l'avantage de changer de fiche en fonction des volumes plus ou moins importants prescrits.

Dans le cas où le récipient est transformé en shaker, une plaque "presse-fruits" amovible qu'un ergot empêcherait de tourner lors des mouvements de rotation des fruits à presser, s'intercalerait entre le corps et un couvercle étanche muni à sa partie supérieure d'un goulot au fond duquel se trouverait une passoire. Le tout serait fermé par un bouchon étanche également lors de l'agitation des préparations.

Ces objets sont atteints grâce au fait que les fiches-recettes ou horaires servent alternativement pour la préparation de tous cocktails, en pâtisserie ou pour toutes compositions diverses et l'utilisateur pourra compléter ou renouveler l'assortiment des fiches-recettes ou horaires par des nouveautés qui pourraient paraître ultérieurement ou par une utilisation dans d'autres domaines.

Selon une autre caractéristique de l'invention, la partie supérieure du récipient est prolongée par une collerette cylindrique démunie de facettes et prévue pour recevoir des éléments supérieurs, tels qu'un presse-fruits, puis un couvercle avec un bouchon.

L'invention apparaîtra plus clairement à l'aide de la description qui va suivre, faite en référence aux dessins annexés donnant uniquement, à titre d'illustration, un mode de mise en oeuvre.

Dans ces dessins:

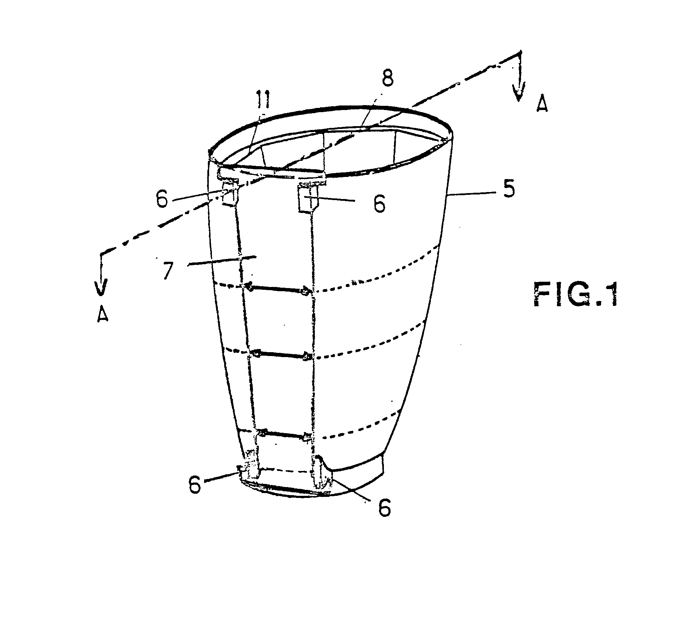

— la figure 1 est une vue schématique montrant en perspective le récipient portatif muni des systèmes supérieurs et inférieurs destiné au maintien de la fiche-recette ou horaire;

— la figure 2 montre une coupe suivant A—A de profil de la figure 1;

— la figure 3 montre une vue de dessus, suivant une coupe A—A de la figure 1;

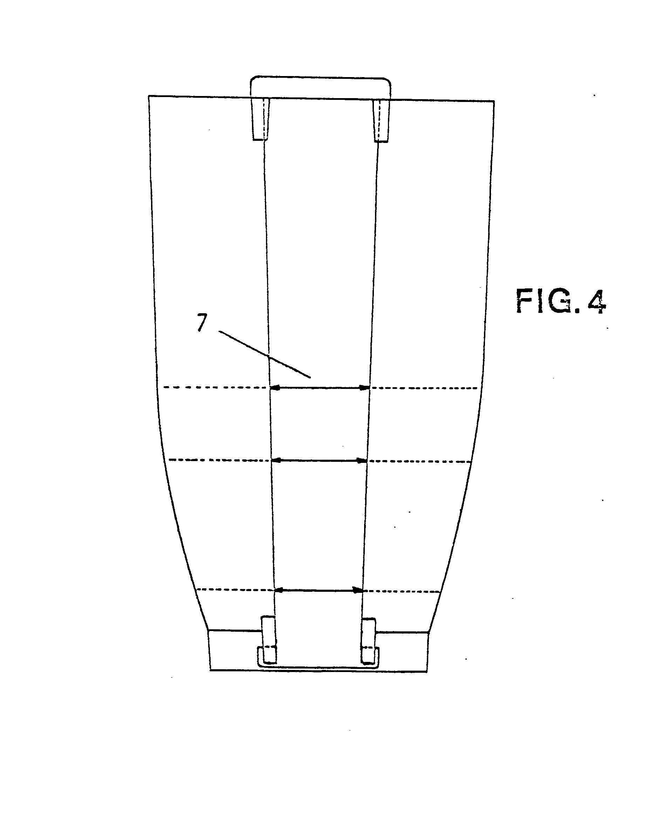

— la figure 4 montre une vue de la fiche-recette ou horaire;

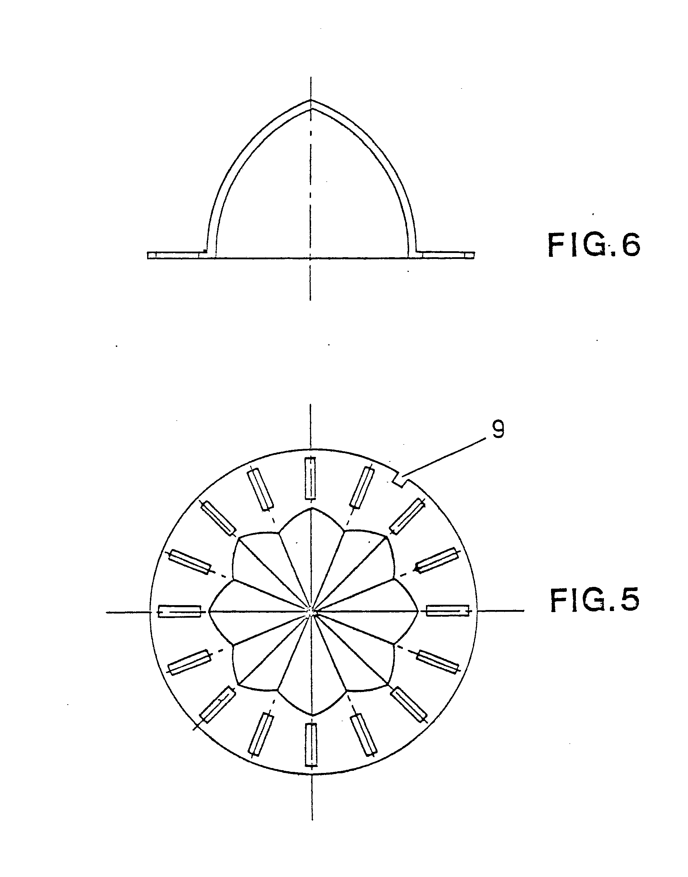

— la figure 5 montre une vue de dessus du presse-fruits prévu pour s'encastrer dans le récipient selon la ligne Z—Z de la figure 2;

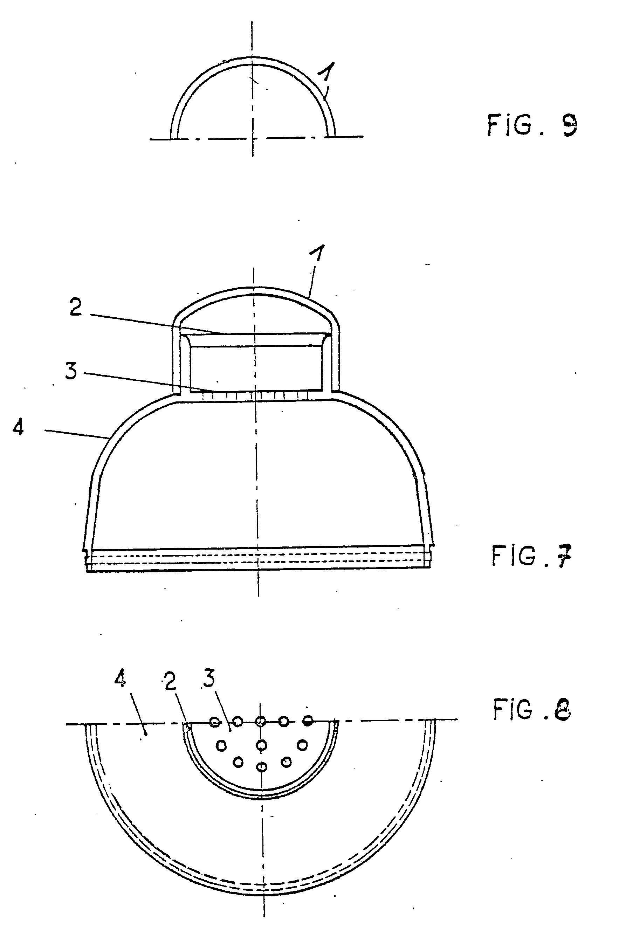

— la figure 6 montre une vue schématique de profil du presse-fruit;

— la figure 7 montre une vue de profil d'un couvercle destiné à transformer le récipient portatif en shaker;

— la figure 8 montre une vue en coupe de dessus du couvercle de la figure 7;

— la figure 9 montre une vue en coupe de dessus du bouchon de la figure 7.

Conformément à l'invention, le dispositif comprend un corps 5 transparent, particularité essentielle de forme galbée et tronçonique — sans toutefois que cette définition de forme soit restrictive — sa paroi extérieure lisse est munie de systèmes saillants hauts et bas 6 destinés à recevoir soit les fiches-recettes ou horaires 7 et qui seront maintenues en butée par le haut ou le bas et ce, pour éviter tout décalage avec le niveau zéro du récipient, ainsi elles se trouveront plaquées contre la paroi grossissante à cheval sur deux facettes extérieures.

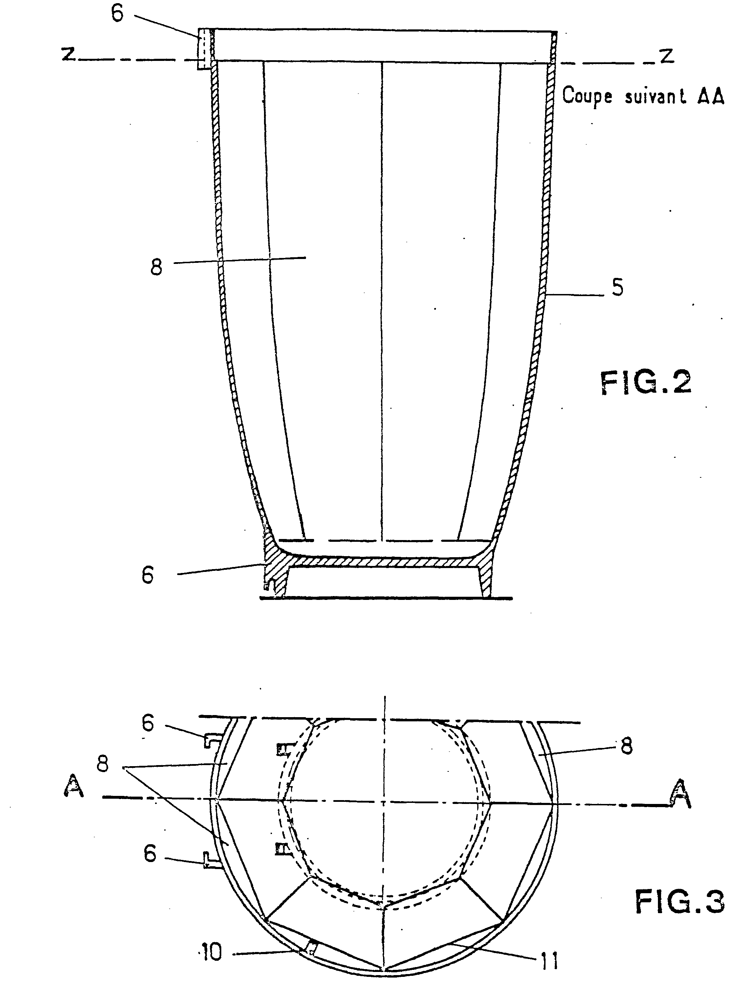

Au-dessus du corps 5 s'emboîterait un presse-fruit que grâce à une encoche 9 et une butée prévue 10 dans l'épaisseur d'une facette (Fig. 3), celui-ci serait maintenu fixe, malgré les mouvements de rotation exercés en pressant les fruits.

L'utilisateur de ce récipient 5, qui désire préparer une recette choisira la fiche 7 qui lui conviendra et l'engagera dans les systèmes 6, prévus en haut et en bas du corps 5. Cette opération terminée, il n'aura qu'à suivre les niveaux imprimés sur la fiche 7 et verser le produit ou liquide désigné sur ladite fiche 7. La composition sera réalisée de façon simple et précise.

En effet, les facettes intérieures 11 formeront loupe et les niveaux seront mieux définis et visibles aisément puisque la fiche 7 se trouvera sur les bords extrêmes gauche et droit en regard de la médiane de deux facettes extrérieures 8.

La compostion terminée, la fiche 7 peut être retirée et le corps 5 complété par un couvercle 4, lequel sera fermé par un bouchon 1 qui recouvrira un goulot 2, permettra, après agitation de verser la préparation en retirant le bouchon 1. La passoire 3 retiendra les produits qui ne devront pas être absorbés.

Cet instrument permet donc une utilisation agréable et rationnelle et sa présentation, au moment de servir, ne laisse apparaître aucune indication de la méthode employée pour la réalisation puisque le fiche-recette est amovible.

Le dispositif, objet de l'invention, peut être utilisé dans tous les cas où la préparation d'une recette, d'une formule ou même lorsque le contrôle d'un débit dans un récipient doit être assuré d'une façon précise, facile, sans connaissance spéciale, nécessairement et tout particulièrement lorsque des proportions doivent être respectées, aussi bien à la préparation qu'à l'utilisation. Il peut servir aussi bien à la ménagère qu'au barman, dans la restauration et également dans le domaine médical et pharmaceutique.

Des applications particulièrement intéressantes peuvent être la réalisation de recettes de boissons ou pâtisserie et la préparation de liquide à des fins médicales ou pharmaceutiques. La double fonction du dispositif permet donc l'élaboration des compositions et le contrôle par transparence de la consommation d'une quantité sur des bases horaires pouvant varier selon certaines exigences.

Bien entendu, l'invention n'est nullement limitée au mode de réalisation décrit et représenté.

**Revendications**

1. Récipient transparent (5) en particulier de forme cylindrique ou tronçonique, destiné notamment à contenir des liquides, des produits d'alimentation ou des médicaments, ledit récipient étant muni des moyens (6) destinés à maintenir le long de sa paroi extérieure une fiche amovible (7) portant des indications de niveaux, caractérisé en ce qu'il comporte une paroi intérieure (11) à facettes verticales (8) formant loupes améliorant la visibilité et la définition des niveaux.

2. Récipient selon la revendication 1, caractérisé en ce que les facettes sont planes.

3. Récipient selon la revendication 1 ou 2, caractérisé en ce que les moyens de maintien (6) de la fiche (7) sont constitués à la partie supérieure du récipient de deux glissières orientés verticalement avec un écartement correspondant à la largeur de la fiche et à la partie inférieure du récipient, d'éléments formant butée et munis d'une saignée parallèle à la paroi cylindrique du socle du récipient permettant l'accrochage de la fiche par le bas: ladite fiche étant munie à chacun des angles inférieurs et supérieurs des parties débordantes dont les bords horizontaux inférieurs et supérieurs viennent respectivement en butée sur lesdits moyens de maintien.

4. Récipient selon la revendication 1, 2 ou 3 caractérisé en ce que les moyens de maintien (6) de la fiche (7) sont disposés de telle façon que la fiche sera plaquée à l'extérieur du récipient (5), contre la paroi grossissante, à cheval sur deux facettes (8) adjacentes.

5. Récipient selon l'une quelconque des revendications 1 à 4 caractérisé en ce que la fiche (7) est réalisée en matériau souple ou rigide, notamment un plastique, carton ou rhodoïd.

6. Récipient selon l'une quelconque des revendications précédentes, caractérisé en ce que la partie supérieure de récipient (5) est prolongée par une collerette cylindrique démunie de facettes (8) et prévue pour recevoir des éléments supérieurs, tels qu'un presse-fruits, puis un couvercle (4) avec un bouchon (1).

**Patentansprüche**

1. Der durchsichtige Behälter (5), besonders in zylindrischer oder kegelstumpfförmiger Form, der dazu bestimmt ist, vor allem Flüssigkeiten, Nahrungsmittel oder Medikamente aufzunehmen, ist mit Vorrichtungen (6) versehen, die es erlauben, auf seiner Aussenwand einen austauschbaren Zettel (7) anzubringen, auf dem Niveau-Angaben stehen. Der Behälter ist dadurch gekennzeichnet, dass er eine Innenwand (11) mit senkrechten Facetten (8) besitzt, die wie eine Lupe wirken und dadurch die Sichtbarkeit und die Feststellung des Flüssigkeitsspiegelsverbessern.

2. Gemäss des Anspruch 1 ist der Behälter gekennzeichnet dadurch, dass die Facetten flach sind.

3. Nach den Ansprüchen 1 oder 2 ist der Behälter dadurch gekennzeichnet, dass die Haltevorrichtungen (6) für den Zettel (7) am oberen Teil des Behälters bestehen aus zwei senkrechten Gleitschienen im Abstand, der der Breite des Zettels entspricht, am unteren Teil des Behälters aus Elementen, die einen Anschlag bilden und eine Rille haben, die parallel zu der zylindrischen Wand des Sockels verläuft, was die Befestigung des Zettels am unteren Teil erlaubt. Besagter Zettel ist sowohl an den unetren wie den oberen Ecken mit überstehenden Teilen versehen, deren obere und untere horizontale kanten jeweils auf die angegebenen Befestigungsmöglichkeiten anschlagen.

4. Nach den Ansprüchen 1, 2, oder 3 ist der Behählter dadurch gekennzeichnet, dass die Vorrichtungen für die Befestigung (6) des Zettels (7) so gebaut sind, dass der Zettel auf der Aussenwand des Behälters (5) angebracht wird, gegen die vergrössernde Wand, auf zwei benachbarten äusseren Facetten.

5. Gemäss irgendeinem der Ansprüche 1 bis 4 ist der Behälter dadurch gekennzeichnet, dass der Zettel aus weichem oder starrem Material hergestellt ist, vor allem aus Plastik, karton oder Rhodoïd.

6. Gemäss irgendeinem der oben angegebenen Ansprüche ist der Behälter dadurch gekennzeichnet, dass der obere Teil des Behälters (5) um einen zylindrischen Teil verlängert ist, der keine Facetten hat und für Aufsatzteile vorgesehen ist, wie Fruchtpresse, dann ein Deckel und ein Stopfen.

**Claims**

1. Transparent receptacle (5) particularly cylindric form or frustoconical in order to contain liquids, foods product, or medicament. This receptacle is adapted with means (6) to maintain against the outside a movable card (7) upon which are printed the level.

2. Receptacle such as claimed in claim 1, characterised by the level facets.

3. Receptacle such as claimed in claims 1 or 2, characterised by the means by which the cards (7) are fixed (6) at the top, two vertically orientated sliding channels corresponding to the width of the card with is thus held in place laterally and at the bottom components forming stops, equipped with a groove parallel to the cylindrical surface of the base and at a distance allowing for the passage of the width of the bottom of the card and attaching of the card by its internal angles of the wider parts placed on the left and on the right of the card.

4. Receptacle such as claimed in claims 2 or 3, characterised by the means of fixation of the card are conceived of in such a way as to keep the vertical edges of the cards pressed flat against the outside, against the enlarging wall, and straddling two contiguous facets.

5. Receptacle such as claimed in claims 1 to 4, characterised by the means the card may be made in flexible material which is also rigid, notably plastics, cardboard or rhodoïd.

6. Receptacle such as claimed above characterised by the means the top of this receptacle is prolongated with cylindrical flange without facet (8) and forecasted to receive a fruit pressing, then a cover (4) with a watertight stopper (1).

FIG.1

FIG.2

Coupe suivant AA

FIG.3

2

FIG. 4

7

FIG.6

FIG.5

9

FIG. 9

FIG. 7

FIG. 8